# EUROPÄISCHE PATENTANMELDUNG

(11) **EP 0 645 577 A1**
(43) Veröffentlichungstag der Anmeldung: **29.03.1995**
(21) Anmeldenummer: 94810552.3
(22) Anmeldetag: 23.09.1994
(51) Int. Cl.: F16M 11/24

(54) **Support**

(30) Priorität: 24.09.1993 CH 2892/93
(71) Anmelder: PROVENDA MARKETING AG, CH-9038 Rehetobel (CH)
(72) Erfinder: Eberle, Emil, CH-9038 Rehetobel (CH)
(74) Vertreter: Riederer, Conrad A., Dr.

(57) **Zusammenfassung**

Ein Support weist eine höhenverstellbare Säule (13)und eine einen Durchlass (21) aufweisende Verstellvorrichtung (11) auf. Die Säule (13) ist im Durchlass (21) der Verstellvorrichtung (11) geführt. Die Position der Säule (13) ist durch eine Hülse (23) feststellbar. Die Säule (13) weist zu diesem Zweck eine Vielzahl von in Abständen voneinander angeordneten Rillen (25) auf, in welche die in den Durchlass (21) passende Hülse (23) mit Nocken (27) einrasten kann. Die Hülse (23) hat einen Anschlag (29) und mehrere federnde Finger (31). Die Finger (31) weisen an der Innenfläche Nocken (27) auf, die eine den Rillen (25) entsprechende Form haben. Zum Verstellen der Säule (13) muss diese legiglich aus der Verstellvorrichtung (11) gehoben und die Hülse (23) an die gewünschte Position verschoben werden, bis die Nocken (27) in einer der Rillen (25) einrasten. Anschliessend kann die Säule wieder bis zum Anschlag abgesenkt werden.

## Beschreibung

Die vorliegende Erfindung betrifft einen Support, insbesondere zum Anordnen und Positionieren von Regalen, Bildschirmen, Ablagen, Ordnern und dergleichen, mit einer Säule, welche eine Vielzahl von in Abstand voneinander angeordneten Ausnehmungen besitzt, einer einen Durchlass für die Säule aufweisenden Verstellvorrichtung, welche ein Arretierelement besitzt, welches in Eingriff mit einer der Ausnehmungen gebracht werden kann, um die Säule in der gewünschten Stellung zu arretieren.

Im Wohn- und im besonderen im Bürobereich braucht es häufig Supports der eingangs erwähnten Art, um die unterschiedlichsten Gegenstände, wie z.B. Regale, Bildschirme, Sichtblenden und dergleichen, anzuordnen. Dabei wird geschätzt, wenn die Supports rasch in der Höhe verstellt werden können. Bei einem Büroarbeitsplatz ist es z.B. wichtig, dass die zur Verrichtung der Arbeit benötigten Bildschirme in idealem Abstand und in optimaler Höhe zum Benützer angeordnet sind. Sie sollten daher auf einem Support angeordnet sein, welcher höhenverstellbar und drehbar ist. An den Bürotischen sind häufig Führungsschienen oder eine Reling vorgesehen, an welchen z.B. ein Support mit einer höhenverstellbaren Säule für den Bildschirm befestigt werden kann. Die Säule wird dabei in der Regel durch eine Feststellschraube arretiert. Ebenso wird eine Feststellschrauben benötigt, um den Support z.B. an der Reling festzustellen. Die Herstellung einer Verstellvorrichtung mit zwei Feststellschrauben ist jedoch sehr aufwendig. Auch müssen die Feststellschrauben aus Platzgründen in zwei unterschiedliche Richtungen orientiert sein, sodass ein relativ klobiger und unansehlicher Support entsteht, welcher von der Reling absteht.

Die US-A-2 128 409 zeigt ein Fernrohrstativ mit einer das Fernrohr tragenden Säule, welche eine Vielzahl von in Abstand voneinander angeordneten Rillen besitzt. Eine Verstellvorrichtung weist als Arretierelement eine Schraube auf, welche in Eingriff mit einer der Ausnehmungen gebracht werden kann, um die Säule in der gewünschten Stellung zu arretieren.

Im Gegensatz zum beschriebenen Fernrohrstativ, wo die Säule höhenverstellbar ist, sind bei dem in der US-A-4 763 799 gezeigten Wagen vier feststehende Säulen vorhanden, an denen zwei Böden höhenverstellbar befestigt sind. Die dort gezeigte Verstellvorrichtung dient also nicht als Support für eine Säule, sondern die Säule dient als Support für die Verstellvorrichtung, die als Teil des höhenverstellbaren Bodens ausgebildet ist. Die Säulen des Wagens besitzen eine Anzahl von in Abständen voneinander angeordneten Rillen und führen durch Durchlässe, die an den vier Ecken eines Bodens angeordnet sind. Diese Durchlässe besitzen einen nach unten sich erweiternden konischen Abschnitt, in welche zwei Schalenhälften passen, deren Innenkontur der Säule entspricht, wobei ein nach innen gerichteter Wulst in eine Rille der Säule eingreifen kann. Um die Höhe eines Bodens zu verstellen, muss der Boden angehoben werden. Die Schalenhälften können dann entnommen und an anderer Stelle der Säule wieder so eingesetzt werden, dass die Wülste in eine Rille eingreifen, worauf der Boden wieder abgesenkt werden kann.

Nachteilig ist, dass sich wegen der Konizität die Schalenhälften mit dem Boden verklemmen können, so dass ein erheblicher Kraftaufwand notwendig ist, um den Boden zu lösen. Wird der Boden z.B. durch Schläge plötzlich gelöst, so fallen die Schalenhälften zu Boden. Auch das Einsetzen des Bodens ist relativ kompliziert, denn die Schalenhälften müssen beim Einsetzen von Hand in der gewünschten Lage festgehalten werden.

Es ist Aufgabe der vorliegenden Erfindung, einen Support mit einer höhenverstellbaren Säule und einer Verstellvorrichtung zu schaffen, welcher kompakt und formschön ist und leicht gehandhabt werden kann. Der Support soll auch rationell gefertigt werden können.

Erfindungsgemäss wird dies dadurch erreicht, dass der Durchlass für die Säule auch Raum zum Einsetzen des Arretierelements von oben aufweist, dass das Arretierelement an der Säule verschieb- und feststellbar ist und einen Rastnocken und einen Anschlag aufweist, wobei zur Höhenverstellung der Säule zuerst das Arretierelement ausserhalb des Durchlasses in die gewünschte Raststellung verschoben werden kann, in welcher die Rastnocke in eine der Ausnehmungen einrastet, worauf die Säule nach unten bewegt werden kann, bis diese Bewegung durch den Anschlag begrenzt wird.

Durch den Verzicht auf eine herkömmliche Feststellschraube erhält der Support eine kompakte Form. Zudem können die Fertigungskosten gering gehalten werden. Für den Benützer hat der erfindungsgemässe Feststellungsmechanismus den Vorteil, dass zur Höhenverstellung des Supports keine Werkzeuge benötigt werden und kein Lösen und Festziehen von Schrauben mehr nötig ist. Die Handhabung wird auch dadurch vereinfacht, dass das Arretierelement - im Gegensatz zum Gegenstand der US-A-4 763 799 - von oben her manipuliert werden kann.

Vorteilhaft ist die Säule ein Stab oder Rohr. Dies ermöglicht eine besonders einfache und kostengünstige Herstellung. Zweckmässigerweise ist das Arretierelement eine Hülse, welche mindestens einen, vorteilhaft mehrere Finger mit einem Nocken aufweist. Vorteilhaft sind der oder die Finger federnd ausgebildet, so dass die Hülse leicht von einer Position zur andern verschoben werden kann, wo der oder die Nocken in die Ausnehmungen einrasten und so die Hülse in dieser Lage festsetzen können. Dies vereinfacht die Handhabung, denn die Hülse muss dann beim Absenken der Säule nicht mehr von Hand gehalten werden. Die Ausnehmungen sind vorzugsweise durch eine Vielzahl von querverlaufenden Rillen gebildet. Dadurch kann die Säule auch gedreht werden. Dies ist gerade bei der Anordnung von Bildschirmen bei einem Büroarbeitsplatz wichtig. Der Abstand zweier benachbarter Rillen entspricht dabei der minimalen Verschiebungsdistanz der Säule.

Es ist zweckmässig, wenn die Finger im Querschnitt keilförmige Enden aufweisen. Die Hülse lässt sich dann besonders leicht in die Führung einschieben. Vorteilhaft weist die Führung am unteren Ende einen zum Ende hin sich stark verjüngenden Konus auf. Dieser Konus kann die keilförmigen Enden der Finger aufnehmen, wodurch die Arretierwirkung noch verbessert werden kann, ohne dass die Feststellung schlecht lösbar wird. Zweckmässigerweise hat die Führung eine angesenkte Eintrittsöffnung. Durch diese Eintrittsöffnung kann die Hülse auch dann problemlos eingeführt werden, wenn die Säule schräg steht.

Vorteilhaft besteht die Verstellvorrichtung aus einem Unterteil und einem Oberteil. Ober- und Unterteil können kostengünstig z.B. aus Kunststoff im Spritzgussverfahren hergestellt werden. Vorteilhaft weist der Unterteil einen Gleitschuh auf zum Verschieben und Befestigen des Supports an einer Reling, insbesondere an einer Reling bestehend aus zwei in Abstand voneinander angeordneten Führungsschienen. Der Support kann dadurch horizontal verschoben werden. Vorteilhaft besitzt der Gleitschuh im Querschnitt die Form eines flachgedrückten O's, von welchem etwa ein Viertel weggeschnitten ist, um eine Oeffnung zum Einhängen an der Reling zu bilden, sodass bei der Montage der Unterteil einfach an der Reling eingehängt zu werden braucht. Zweckmässigerweise ist am Unterteil eine Gewindebuchse vorgesehen, um den Oberteil am Unterteil mittels einer Feststellschraube zu fixieren und gleichzeitig die Verstellvorrichtung an der Reling zu arretieren. Die Führung kann durch das Festziehen der Feststellschraube etwas deformiert werden, sodass sich diese an die Reling presst und der Support dadurch an der Reling festgestellt wird. Vorteilhaft weist der Oberteil einen Führungsstutzen für die Feststellschraube auf, welcher so bemessen und derart am Oberteil angeordnet ist, dass er bei Anordnung des Supports an der Reling zwischen die beiden Führungsschienen zu liegen kommt und an diesen und am Führungsteil anliegt. Dadurch wird eine seitlich auf die Säule einwirkende Kraft durch den Stutzen auf die untere Führungsschiene übertragen. Vorteilhaft können zwei oder mehrere Supports zur Halterung eines länglichen Gegenstands, z.B. zur Bildung von Regalen oder zum Anordnen von Sichtblenden, verwendet werden.

Nachfolgend werden Ausführungsbeispiele der Erfindung unter Bezugnahme auf die Figuren beschrieben. Es zeigt
- Fig.1: eine Seitenansicht eines Supports mit einer höhenverstellbaren Säule und einer Verstellvorrichtung,
- Fig.2: a) einen Längsschnitt des Supports gemäss Fig.1,
b) die untere Partie der Verstellvorrichtung in vergrössertem Massstab,
- Fig.3: eine Vorderansicht des an einer Reling angeordneten Supports,
- Fig.4: a) die Säule mit einer als Arretierelement wirkenden Hülse, wobei 3 verschiedene Stellungen der Hülse gezeigt werden, welche diese bei der Verschiebung von einer Rille zur nächsten einnimmt,
b) in vergrössertem Massstab die Hülse gemäss Fig.4a) während des Verschiebens (Stellung 2).

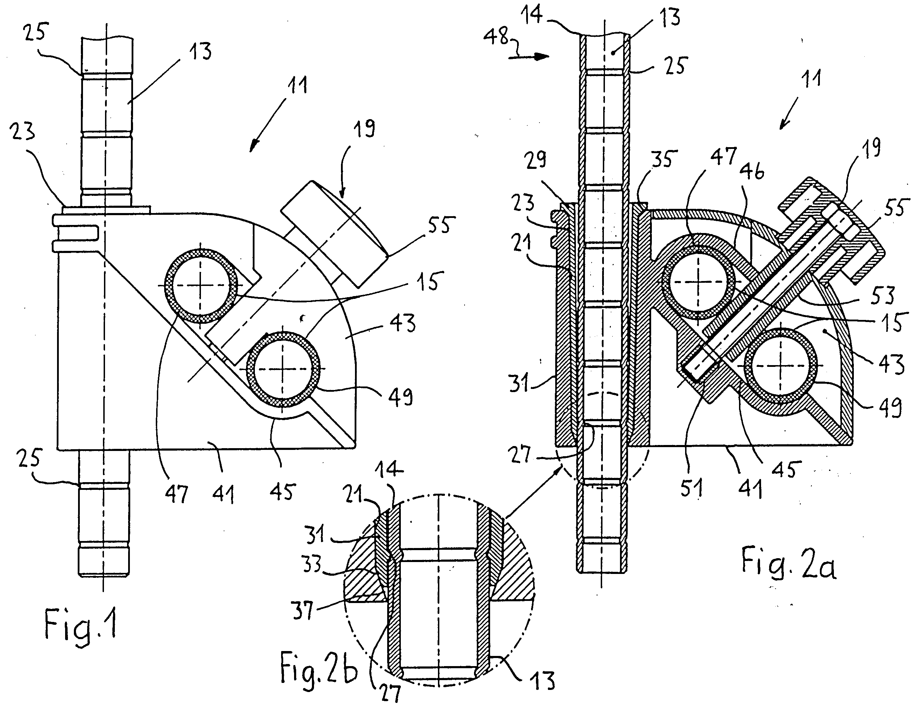

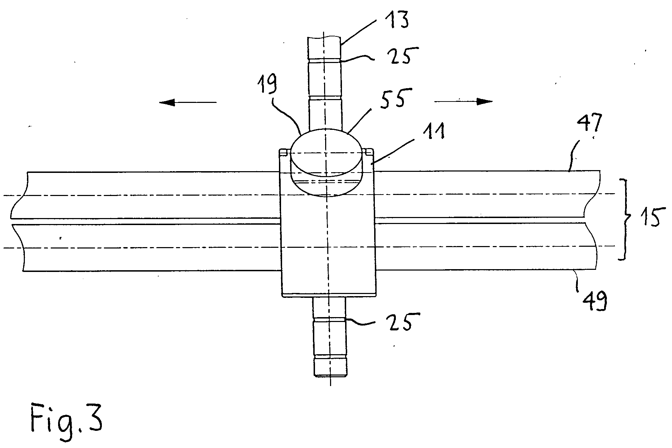

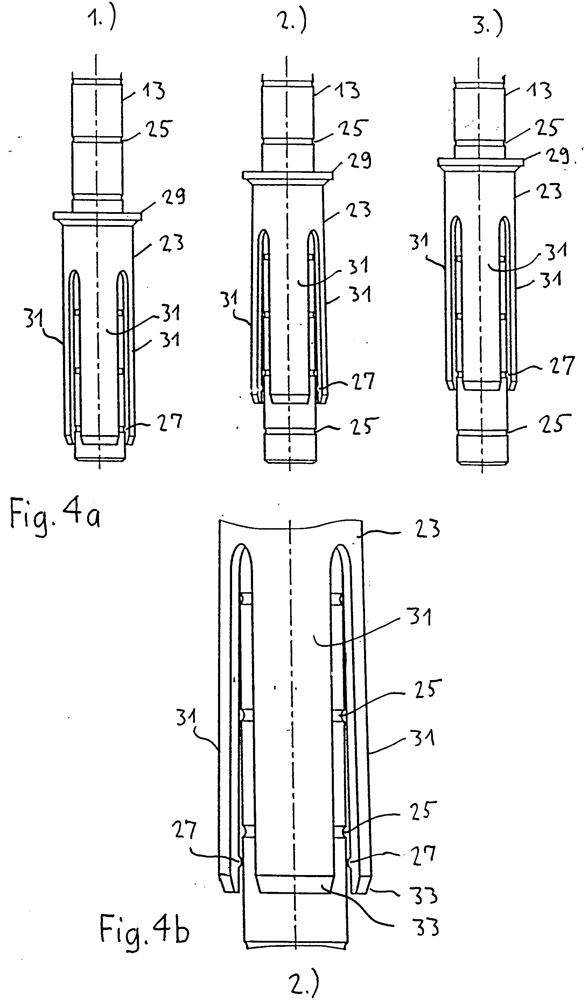

Die Figuren 1 bis 3 zeigen einen Support mit einer verstellbaren, insbesondere höhenverstellbaren Säule 13 und einer Verstellvorrichtung 11. Der Support ist an einer aus zwei Führungsschienen 47,49 bestehenden Reling 15 z.B. horizontal verschiebbar. Die Verstellvorrichtung 11 kann durch eine Feststellschraube 19 an der Reling 15 arretiert werden (Fig.3). Die Säule 13 ist in einem Durchlass 21 der Verstellvorrichtung 11 geführt. Die Position der Säule 13 ist durch eine Hülse 23 feststellbar. Die Säule 13 weist zu diesem Zweck eine Vielzahl von in Abständen voneinander angeordneten Rillen 25 auf, in welche die in den Durchlass 21 passende Hülse 23 mit Nocken 27 einrasten kann. Die Details der Hülse 23 sind aus Figur 4 ersichtlich. Die Hülse 23 hat einen Anschlag 29 und mehrere federnde Finger 31. Die Finger 31 weisen an der Innenfläche die bereits erwähnten Nocken 27 auf, die eine den Rillen 25 entsprechende Form haben (Fig.4b). Um das Einfahren der Hülse 23 in den Durchlass 21 zu erleichtern, sind die Finger 31 am unteren Ende 33 keilförmig ausgebildet. Ausserdem ist die Eintrittsöffnung 35 (Fig. 2a) des Durchlasses 21 angesenkt, sodass das untere Ende 33 der Finger 31 auch bei nichtvertikaler Ausrichtung der Säule 13 von der Eintrittsöffnung 35 erfasst wird.

Zur Arretierung der Säule 13 wird diese mit der Hülse 23 in den Durchlass 21 abgesenkt, bis der Anschlag 29 an dem Support 11 anliegt. Der Durchlass 21 kann dabei leicht konusförmig ausgebildet sein. Das untere Ende des Durchlasses 21 weist einen sich zum Ende hin stark verjüngenden Konus 37 (Fig. 2b) auf, dessen Konuswinkel den keilförmigen Enden 33 der Finger 31 entspricht. Der unten sich verengende Durchlass 21 drückt dabei den Finger 31 an die Säule 13, so dass diese im Support 11 quasi spielfrei gelagert ist (Fig.2b). Die Säule 13 kann, wie in Fig.2a ersichtlich ist, aus einem Rohr 14 oder einem Stab bestehen.

Die in den Figuren 1 und 2 gezeigte, aus einem Unterteil 41 und einem Oberteil 43 bestehende Verstellvorrichtung 11 weist einen die Reling 15 (Fig. 3) aufnehmenden Gleitschuh 45 auf. Der Gleitschuh 45 besitzt die Form eines flachgedrücktes O's, von welchem etwa ein Viertel weggeschnitten ist, um eine Oeffnung zum Einhängen an der Reling 15 zu bilden. Zur Montage des Supports 11 kann der Unterteil 41 der Verstellvorrichtung 11 zuerst an der oberen Führungsschiene 47 eingehängt und danach geschwenkt werden, sodass der Gleitschuh 45 an drei Seiten an der Reling 15 anliegt. Der Unterteil 41 liegt bei Belastung durch die Säule 13 an der unteren Führungsschiene 49 der Reling 15 an, sodass die Säule 13 vertikal nach oben ragt.

Das Festklemmen der Verstellvorrichtung 11 an der Reling 15 geschieht mittels der Feststellschraube 19, welche mit der am Gleitschuh 45 angeordneten Gewindebuchse 51 zusammenwirkt. Die Gewindebuchse 51 kann z.B. am Unterteil 41 des Gleitschuhs 45 eingegossen sein. Beim Festziehen der durch den Oberteil 43 ragenden Feststellschraube 19 wird der Gleitschuh 45 etwas deformiert und gegen die Führungsschienen 47,49 gepresst, sodass die Verstellvorrichtung 11 arretiert wird.

Durch die Feststellschraube 19 wird auch der Oberteil 43 am Unterteil 41 festgehalten. Der Oberteil 43 besteht aus einem halbrunden Gehäuse mit einem Führungsstutzen 53 für die Feststellschraube 19. Der Stutzen 53 hat einen etwa dem Abstand der beiden Führungsschienen 47,49 entsprechenden Durchmesser. Der Führungsteil 46 liegt am Stutzen 53 an, sodass eine in Richtung des Pfeiles 48 auf die Säule 13 wirkende Kraft (Fig.2a) durch den Stutzen 53 auf die untere Führungsschiene 49 übertragen wird. Dadurch wird verhindert, dass die Säule 13 über die Reling 15 kippen kann. Der Stutzen 53 hat aber auch die Funktion eines Abstandhalters. Die Schraube 19 kann nur soweit festgezogen werden, bis der Stutzen 53 und der Unterteil 41 aneinander anliegen. Dadurch verringert sich die Gefahr, dass der Gleitschuh 45 durch zu starkes Festziehen der Schraube 19 beschädigt wird. Ein starkes Festschrauben ist übrigens auch gar nicht nötig, da das Festziehen der Feststellschraube 19 lediglich ein seitliches Verrutschen des Supports 11 verhindern muss. Der Kopf der Schraube ist als Drehknopf 55 ausgebildet.

Wie Fig. 4 zeigt, ist die Verstellung der Säule 13 einfach und sehr schnell zu bewerkstelligen: Zuerst wird die Säule 13 mit der Hülse aus dem Durchlass 21 gehoben, und die Hülse 23 an die gewünschte Stelle hin verschoben, bis die Nocken 27 in einer der Rillen 25 einrasten. Danach wird die Säule 13 wieder abgesenkt. Beim Absenken wird die Säule 13 praktisch spielfrei gelagert.

Beim gezeigten Beispiel rasten in der Stellung 1) die Finger 31 mit den Nocken 27 in die unterste der Rillen 25 ein. Wird die Hülse 23 nach oben bewegt, so werden die Finger 31 federnd nach aussen gespreizt (Stellung 2), wie das insbesonders aus Fig. 4b ersichtlich ist. Sobald die Nocken 27 bei der nächsten Rille 25 anlangen, rasten sie in dieser ein. Die Hülse 23 kann also zu jeder beliebigen Rille 25 geschoben werden, worauf die Säule 13 wieder abgesenkt werden kann. Versucht man in der Zwischenstellung 2 die Säule 13 abzusenken, so stossen die nach aussen gespreizten Finger 31 am Eingang des Durchlasses 21 an, so dass die Säule 13 relativ zur Hülse bewegt wird, bis die Finger 13 mit den Nocken 27 in eine Rille einrastet, worauf dann die Säule 13 samt Hülse 23 in den Durchlass 21 nach unten gleitet, bis der Anschlag 29 ein weiteres Absenken verhindert (Fig. 2a).

## Patentansprüche

1. Support, insbesondere zum Anordnen und Positionieren von Regalen, Bildschirmen, Ablagen, Ordnern und dergleichen, mit einer Säule (13), welche eine Vielzahl von in Abstand voneinander angeordneten Ausnehmungen (25) besitzt, einer einen Durchlass (21) für die Säule aufweisenden Verstellvorrichtung (11), welche ein Arretierelement (23) besitzt, welches in Eingriff mit einer der Ausnehmungen (25) gebracht werden kann, um die Säule in der gewünschten Stellung zu arretieren, dadurch gekennzeichnet, dass der Durchlass (21) für die Säule (13) auch Raum zum Einsetzen des Arretierelements von oben des Arretierelements (23) aufweist, dass das Arretierelement (23) an der Säule (13) verschieb- und feststellbar ist und einen Rastnocken (27) und einen Anschlag (29) aufweist, wobei zur Höhenverstellung der Säule zuerst das Arretierelement (23) ausserhalb des Durchlasses (21) in die gewünschte Raststellung verschoben werden kann, in welcher die Rastnocken (27) in eine der Ausnehmungen (25) einrastet, worauf die Säule (13) nach unten bewegt werden kann, bis diese Bewegung durch den Anschlag (29) begrenzt wird.

2. Support nach Anspruch 1, dadurch gekennzeichnet, dass das Arretierelement eine Hülse (23) ist, welche mindestens einen, vorteilhaft mehrere Finger (31) mit Nocken (27) aufweist.

3. Support nach Anspruch 2, dadurch gekennzeichnet, dass die Finger (31) federnd ausgebildet sind.

4. Support nach einem der Ansprüche 1 bis 3, dadurch gekennzeichnet, dass die Ausnehmungen durch eine Vielzahl von querverlaufenden Rillen (25) gebildet sind.

5. Support nach einem der Ansprüche 2 bis 4, dadurch gekennzeichnet, dass die Finger (31) im Querschnitt keilförmige Enden (33) aufweisen.

6. Support nach einem der Ansprüche 1 bis 5, dadurch gekennzeichnet, dass der Durchlass (21) am unteren Ende einen sich zum Ende hin verjüngenden Konus (37) aufweist.

7. Support nach einem der Ansprüche 1 bis 6, dadurch gekennzeichnet, dass der Durchlass(21) eine angesenkte Eintrittsöffnung (35) aufweist.

8. Support nach einem der Ansprüche 1 bis 7, dadurch gekennzeichnet, dass die Verstellvorrichtung (11) einen Unterteil (41) und einen Oberteil (43) aufweist.

9. Support nach Anspruch 8, dadurch gekennzeichnet, dass der Unterteil (41) einen Gleitschuh (45) aufweist zum Verschieben und Befestigen des Supports an einer Reling (15), insbesondere an einer Reling bestehend aus zwei in Abstand voneinander angeordneten Führungsschienen (47,49).

10. Support nach Anspruch 9, dadurch gekennzeichnet, dass der Gleitschuh (45) im Querschnitt die Form eines flachgedrückten O's besitzt, von welchem etwa ein Viertel weggeschnitten ist, um eine Oeffnung (46) zum Einhängen an der Reling (15) zu bilden.

11. Support nach Anspruch 10, dadurch gekennzeichnet, dass am Unterteil (41) eine Gewindebuchse (51) vorgesehen ist, um den Oberteil (43) am Unterteil (41) mittels einer Feststellschraube (19) zu fixieren und gleichzeitig den Support an der Reling (15) zu arretieren.

12. Support nach Anspruch 10 oder 11, dadurch gekennzeichnet, dass der Oberteil (43) einen Führungsstutzen (53) für die Feststellschraube (19) aufweist, welcher so bemessen und derart am Oberteil (43) angeordnet ist, dass er bei Anordnung des Supports an der Reling (15) zwischen die beiden Führungsschienen (47,49) zu liegen kommt und an diesen und am Führungsteil (46) anliegt.

13. Verwendung von zwei oder mehreren Supports nach einem der Ansprüche 1 bis 13 zur Halterung einer länglichen Einrichtung, z.B. eines Regals.
